# EUROPEAN PATENT APPLICATION

(11) **EP 3 160 172 A1**
(43) Date of publication of application: **26.04.2017**
(21) Application number: 14884639.7
(22) Date of filing: 06.08.2014
(51) Int. Cl.: H04W 4/14

(54) **METHOD AND DEVICE FOR SHORT MESSAGING SERVICE INTERCOMMUNICATION**

(30) Priority: 19.06.2014 CN 201410277001
(71) Applicant: ZTE Corporation, Shenzhen, Guangdong 518057 (CN)
(72) Inventor: LIN, Lang, Shenzhen Guangdong 518057 (CN)
(74) Representative: Savi, Massimiliano
(86) International application number: PCT/CN2014/083801
(87) International publication number: WO 2015/131487

(57) **Abstract**

The present invention discloses a method for short messaging service intercommunication. The method includes: a gateway receiving a short messaging service of a first type transmitted by a first short messaging service system; and the gateway performing protocol conversion on the received short messaging service of the first type to generate a short messaging service of a second type and transmitting the generated short messaging service of the second type to a second short messaging service system. The present invention further discloses an apparatus for short messaging service intercommunication. The present invention converts the short messaging service of the first type received from the first short messaging service system into a short messaging service of the second type and transmits the short messaging service of the second type to the second short messaging service system, which achieves intercommunication of RCS short messaging services and traditional short messaging services, so that a user can receive and transmit the traditional short messaging service through an RCS system and can also transmit and receive the RCS short messaging service through a traditional short messaging service system, thereby facilitating the use by the user. On the other hand, this is also beneficial for promotion and application as well as development of the RCS system.

## Description

### Technical Field

The present invention relates to the field of communication technology, and in particular, to a method and apparatus for short messaging service intercommunication.

### Background of the Related Art

The Rich Communication Suite (RCS) is a kind of converged communication service based on an IMS system, which integrates many communication manners such as address books, voices, instant messages, file transfer, content sharing, presentation, location services etc. It provides users with intercommunicated, converged and rich communication experiences, while providing intercommunication among terminals, businesses and a core network with specifications. Although as the future development direction of communication technology, the RCS has started to be built in full swing on a global scale, it can be expected that for a long time in the future, traditional communication networks are still the main platform for carrying telecommunications businesses. And intercommunication cannot be achieved for traditional Short Messaging Services (SMSs) transmitted and received in the traditional short messaging service system (SMS system) and the RCS short messaging services transmitted and received in the RCS system, that is, the traditional short messaging services transmitted and received in the traditional short messaging system cannot be acquired or read by a user through the RCS system, and the RCS short messaging services transmitted and received in the RCS system also cannot be acquired or read by the user through the traditional short messaging service system. Therefore, it brings inconvenience of use to the user.

The above-mentioned content is only used for assisting in understanding the technical solutions of the present invention and is not intended to admit that the above-mentioned content is the existing technology.

### Summary of the Invention

In order to solve the existing technical problem, the present invention primarily provides a method and apparatus for short messaging service intercommunication.

An embodiment of the present invention provides a method for short messaging service intercommunication, including the following steps:
a gateway receiving a short messaging service of a first type transmitted by a first short messaging service system; and
the gateway performing protocol conversion on the received short messaging service of the first type to generate a short messaging service of a second type and transmitting the generated short messaging service of the second type to a second short messaging service system, herein
the first short messaging service system is a traditional short messaging service system, the short messaging service of the first type is a traditional short messaging service, the second short messaging service system is a rich communication suite system, and the short messaging service of the second type is a rich communication suite short messaging service; or, the first short messaging service system is a rich communication suite system, the short messaging service of the first type is a rich communication suite short messaging service, the second short messaging service system is a traditional short messaging service system, and the short messaging service of the second type is a traditional short messaging service.

In addition, an embodiment of the present invention further provides an apparatus for short messaging service intercommunication, including:
a reception module arranged to receive a short messaging service of a first type transmitted by a first short messaging service system; and
a conversion module arranged to perform protocol conversion on the received short messaging service of the first type to generate a short messaging service of a second type and transmit the generated short messaging service of the second type to a second short messaging service system, herein
the first short messaging service system is a traditional short messaging service system, the short messaging service of the first type is a traditional short messaging service, the second short messaging service system is a rich communication suite system, and the short messaging service of the second type is a rich communication suite short messaging service; or, the first short messaging service system is a rich communication suite system, the short messaging service of the first type is a rich communication suite short messaging service, the second short messaging service system is a traditional short messaging service system, and the short messaging service of the second type is a traditional short messaging service.

In the embodiment of the present invention, a gateway receives a short messaging service of a first type transmitted by a first short messaging service system; and the gateway performs protocol conversion on the received short messaging service of the first type to generate a short messaging service of a second type and transmits the generated short messaging service of the second type to a second short messaging service system. With the present invention, the short messaging services of the first type received from the first short messaging service system are converted into short messaging services of the second type to transmit to the second short messaging service system, which achieves intercommunication of RCS short messaging services and traditional short messaging services, so that a user can receive and transmit the traditional short messaging services through an RCS system and can also transmit and receive the RCS short messaging services through a traditional short messaging service system, thereby facilitating the use by the user. On the other hand, this is also beneficial for promotion and application as well as development of the RCS system.

### Brief Description of Drawings

Fig. 1 is a flowchart of the first embodiment of a method for short messaging service intercommunication according to the present invention;
Fig. 2 is a flowchart of the second embodiment of a method for short messaging service intercommunication according to the present invention;
Fig. 3 is a flowchart of the third embodiment of a method for short messaging service intercommunication according to the present invention;
Fig. 4 is a functional module diagram of the first embodiment of an apparatus for short messaging service intercommunication according to the present invention;
Fig. 5 is a refined functional module diagram of a conversion module in the apparatus for short messaging service intercommunication in Fig. 4;
Fig. 6 is a functional module diagram of the second embodiment of an apparatus for short messaging service intercommunication according to the present invention;
Fig. 7 is a functional module diagram of an alternative embodiment of an apparatus for short messaging service intercommunication according to the present invention; and
Fig. 8 is a functional module diagram of the third embodiment of an apparatus for short messaging service intercommunication according to the present invention;

### Specific Embodiments

It should be understood that the specific embodiments described here are merely used to explain the present invention, instead of limiting the present invention.

An embodiment of the present invention provides a method for short messaging service intercommunication.

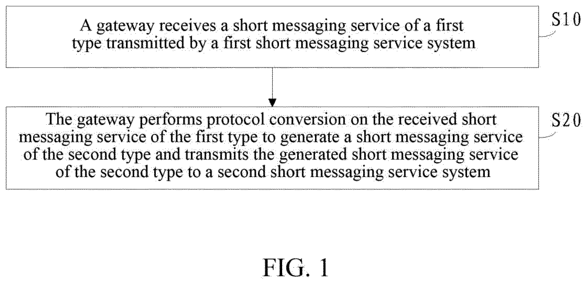

With reference to Fig. 1, illustrated is a flowchart of the first embodiment of a method for short messaging service intercommunication according to the present invention.

In the first embodiment of the method for short messaging service intercommunication according to the present invention, the method includes the following steps.

In step S10, a gateway receives a short messaging service of a first type transmitted by a first short messaging service system.

The first short messaging service system is an SMS system, the short messaging service of the first type is an SMS short messaging service, the second short messaging service system is an RCS system, and the short messaging service of the second type is an RCS short messaging service; alternatively, the first short messaging service system is an RCS system, the short messaging service of the first type is an RCS short messaging service, the second short messaging service system is an SMS system, and the short messaging service of the second type is an SMS short messaging service. Herein, both of the SMS short messaging service and the RCS short messaging service are short messaging services which can be stored and forwarded. The SMS system includes an SMS short messaging service center, an SMS short messaging service business gateway, an SMS short messaging service industry gateway, an SMS intercommunication gateway etc.

The present embodiment uses the RCS system as the first short messaging service system, the RCS short messaging service as the short messaging service of the first type, the SMS system as the second short messaging service system, and the SMS short messaging service as the short messaging service of the second type. It should be noted that the present embodiment is not limited to the case where the RCS system is used as the first short messaging service system, the RCS short messaging service is used as the short messaging service of the first type, the SMS system is used as the second short messaging service system, and the SMS short messaging service is used as the short messaging service of the second type. If the RCS system is the second short messaging service system, the RCS short messaging service is the short messaging service of the second type, the SMS system is the first short messaging service system, and the SMS short messaging service is the short messaging service of the first type, those skilled in the art can also achieve intercommunication of the RCS short messaging services and the traditional short messaging services according to the method provided in the present invention.

Before performing step S10, the gateway interfaces with the SMS system and the RCS system. For example, it is connected to the SMS system through an SMPPBIND instruction.

In the present embodiment, before performing step S10, the gateway may also access the RCS system as an identity of User Equipment (UE). For example, the gateway transmits a registration instruction (for example, SIPREGISTER) to the RCS system for registration. After the registration is completed, the gateway establishes a connection with the RCS system as a user equipment. Thus, there is no need to transform the traditional communication network and the RCS network.

If a user needs to transmit a short messaging service to the SMS system through the RCS system, the user transmits an RCS short messaging service in the RCS system. The RCS system transmits the RCS short messaging service to the gateway, which receives the RCS short messaging service transmitted by the RCS system.

In step S20, the gateway performs protocol conversion on the received short messaging service of the first type to generate a short messaging service of the second type and transmits the generated short messaging service of the second type to a second short messaging service system.

As protocols of the SMS system and the RCS system are different, the gateway is required to perform protocol conversion on the RCS short messaging service according to the received RCS short messaging service to adapt to the protocol of the SMS system. After the gateway performs protocol conversion on the RCS short messaging service, an SMS short messaging service is generated and the generated SMS short messaging service is transmitted to the SMS system. After receiving the SMS short messaging service, the SMS system transmits the SMS short messaging service to a corresponding user, which achieves intercommunication of the RCS system and the SMS system.

In the present embodiment, the gateway may further select a destination network element according to a preset rule. The destination network element may be an SMS short messaging service center, an SMS short messaging service business gateway, an SMS short messaging service industry gateway, an SMS intercommunication gateway etc.

In the present embodiment, a gateway receives a short messaging service of a first type transmitted by a first short messaging service system; and the gateway performs protocol conversion on the received short messaging service of the first type to generate a short messaging service of a second type and transmits the generated short messaging service of the second type to a second short messaging service system. The present embodiment converts the short messaging service of the first type received from the first short messaging service system into a short messaging service of the second type and transmits the short messaging service of the second type to the second short messaging service system, which achieves intercommunication of an RCS short messaging service and a traditional short messaging service, so that a user can receive and transmit the traditional short messaging services through an RCS system and can also transmit and receive the RCS short messaging services through a traditional short messaging service system, thereby facilitating the use by the user. On the other hand, this is also beneficial for promotion and application as well as development of the RCS system.

In an alternative embodiment of the present invention, the step of the gateway performing protocol conversion on the received short messaging service of the first type to generate a short messaging service of the second type and transmitting the generated short messaging service of the second type to a second short messaging service system includes:
when the first short messaging service system does not generate a first information identifier and the second short messaging service system does not generate a second information identifier, generating the first information identifier according to the received short messaging service of the first type, returning the generated first information identifier to the first short messaging service system, performing protocol conversion on the received short messaging service of the first type to generate the short messaging service of the second type, and generating the second information identifier according to the first information identifier; and transmitting the generated second information identifier and the generated short messaging service of the second type to the second short messaging service system, or storing the second information identifier in the short messaging service of the second type, and transmitting the short messaging service of the second type carrying the second information identifier to the second short messaging service system.

As both the RCS system and the SMS system have a plurality of protocols, when the protocols are different, the systems for generating the first information identifier and the second information identifier may also be different. Therefore, the first information identifier may be generated by the first short messaging service system or the gateway, and the second information identifier may be generated by the second short messaging service system or the gateway. Therefore, there are four cases described in the present embodiment respectively.

When the first short messaging service system does not generate the first information identifier and the second short messaging service system does not generate the second information identifier, the gateway generates the first information identifier and the second information identifier. The gateway generates the first information identifier according to the received short messaging service of the first type and generates the second information identifier according to the first information identifier and the requirements of the protocol of the second short messaging service system. As both of the first information identifier and the second information identifier are generated by the gateway, the first information identifier and the second information identifier may be the same, that is, the generated first information identifier is a general information identifier; and, of course, the first information identifier and the second information identifier may also be different. It should be noted that the present embodiment does not limit an order of the generation of the second information identifier and the generation of the short messaging service of the second type. Protocol conversion may be firstly performed on the received short messaging service of the first type to generate a short messaging service of the second type and then the second information identifier may be generated according to the first information identifier. Alternatively, the second information identifier may be firstly generated according to the first information identifier, and then protocol conversion is performed on the received short messaging service of the first type to generate the short messaging service of the second type.

The gateway returns the generated first information identifier to the first short messaging service system. For example, if the first short messaging service system is an SMS system and the SMS system uses an SMPP protocol, the gateway returns the first information identifier to the SMS system using the SMPP DELIVER RESP message. Methods for transmitting an information identifier are different for different protocols. Therefore, the gateway transmits the generated second information identifier and the generated short messaging service of the second type to the second short messaging service system, or stores the second information identifier in the short messaging service of the second type, and transmits the short messaging service of the second type carrying the second information identifier to the second short messaging service system. For example, in an SIP protocol, the second information identifier is stored in a header field imdn.Message-ID of SIPMESSAGE.

When the first short messaging service system does not generate the first information identifier and the second short messaging service system generates the second information identifier, generating the first information identifier according to the received short messaging service of the first type, returning the generated first information identifier to the first short messaging service system, performing protocol conversion on the received short messaging service of the first type to generate the short messaging service of the second type, and transmitting the generated short messaging service of the second type to the second short messaging service system.

When the first short messaging service system does not generate the first information identifier and the second short messaging service system generates the second information identifier, the gateway only needs to generate the first information identifier without generating the second information identifier.

The gateway generates the first information identifier according to the received short messaging service of the first type and the protocol of the first short messaging service system.

The gateway returns the generated first information identifier to the first short messaging service system, and as the gateway does not generate the second information identifier, only the generated short messaging service of the second type is transmitted to the second short messaging service system.

When the first short messaging service system generates the first information identifier and the second short messaging service system does not generate the second information identifier, the first information identifier of the received short messaging service of the first type is acquired, protocol conversion is performed on the received short messaging service of the first type to generate the short messaging service of the second type, and the second information identifier is generated according to the acquired first information identifier; and the generated second information identifier and the generated short messaging service of the second type is transmitted to the second short messaging service system, or the second information identifier is stored in the short messaging service of the second type, and the short messaging service of the second type carrying the second information identifier is transmitted to the second short messaging service system.

When the first short messaging service system generates the first information identifier and the second short messaging service system does not generate the second information identifier, the gateway only needs to generate the second information identifier without generating the first message identifier. The gateway acquires the first information identifier of the received short messaging service of the first type, for example, the gateway transmits an instruction to the first short messaging service system, which transmits the first information identifier to the gateway; or when the first short messaging service system transmits the short messaging service of the first type to the gateway, the short messaging service of the first type carries the first information identifier, and the gateway acquires the first information identifier from the received short messaging service of the first type.

The gateway generates the second information identifier according to the first information identifier. For example, content of the first information identifier is read, and the second information identifier is generated in accordance with the read content according to the protocol of the second short messaging service system. The gateway returns the generated first information identifier to the first short messaging service system, and transmits the generated short messaging service of the second type to the second short messaging service system. It should be noted that the present embodiment does not limit an order of the generation of the second information identifier and the generation of the short messaging service of the second type. Protocol conversion may be firstly performed on the received short messaging service of the first type to generate the short messaging service of the second type, and then the second information identifier is generated according to the first information identifier. Alternatively, the second information identifier may be firstly generated according to the first information identifier, and then protocol conversion is performed on the received short messaging service of the first type to generate the short messaging service of the second type.

The gateway transmits the generated second information identifier and the generated short messaging service of the second type to the second short messaging service system, or stores the second information identifier in the short messaging service of the second type and transmits the short messaging service of the second type carrying the second information identifier to the second short messaging service system.

When the first short messaging service system generates the first information identifier and the second short messaging service system generates the second information identifier, the first information identifier of the received short messaging service of the first type is acquired, protocol conversion is performed on the received short messaging service of the first type to generate the short messaging service of the second type, and the generated short messaging service of the second type is transmitted to the second short messaging service system.

When the first short messaging service system generates the first information identifier and the second short messaging service system generates the second information identifier, the gateway does not need not to generate the first information identifier or the second information identifier. The gateway acquires the first information identifier of the received short messaging service of the first type, which may be known with reference to the above described method of the gateway acquiring the first information identifier of the received short messaging service of the first type when the first short messaging service system generates the first information identifier and the second short messaging service system does not generate the second information identifier. As the gateway does not generate the second information identifier, only the generated short messaging service of the second type is transmitted to the second short messaging service system.

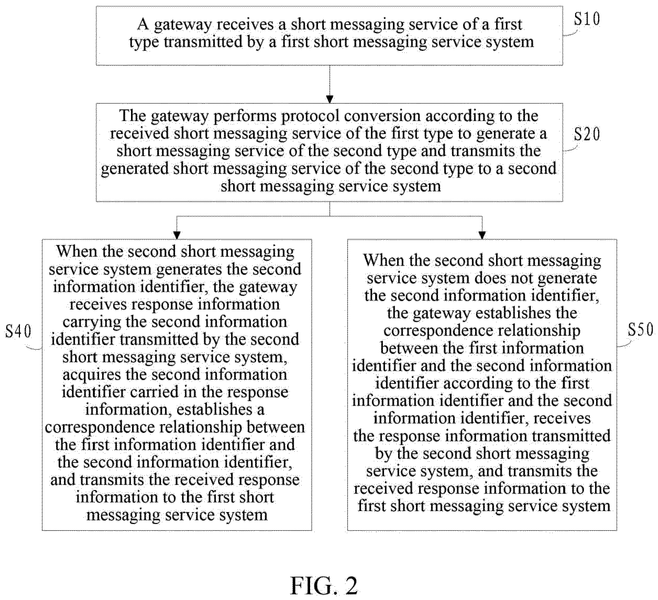

With reference to Fig. 2, illustrated is a flowchart of the second embodiment of a method for short messaging service intercommunication according to the present invention.

In the second embodiment of the method for short messaging service intercommunication according to the present invention, the present embodiment differs from the first embodiment in that, on the basis of the first embodiment, in the present embodiment, after the step of the gateway performing protocol conversion on the received short messaging service of the first type to generate a short messaging service of the second type and transmitting the generated short messaging service of the second type to a second short messaging service system, the method further includes: in step S40, when the second short messaging service system generates the second information identifier, the gateway receives response information carrying the second information identifier transmitted by the second short messaging service system, acquires the second information identifier carried in the response information, establishes a correspondence relationship between the first information identifier and the second information identifier, and transmits the received response information to the first short messaging service system; and
when the second short messaging service system generates the second information identifier, the gateway does not generate the second information identifier. Therefore, the second short messaging service system transmits response information carrying the second information identifier to the gateway, which acquires the second information identifier from the response information, and establishes a correspondence relationship between the first information identifier and the second information identifier, which may be a correspondence relationship between a first information identifier and a plurality of second information identifiers, or may also be a correspondence relationship between a plurality of first information identifiers and a second information identifier. This correspondence relationship may be a mapping table of the first information identifier and the second information identifier, or may also be an algorithm for unique conversion between the first information identifier and the second information identifier, or any other suitable form.

The gateway transmits the received response information to the first short messaging service system.

In step S50, when the second short messaging service system does not generate the second information identifier, the gateway establishes the correspondence relationship between the first information identifier and the second information identifier according to the first information identifier and the second information identifier, receives the response information transmitted by the second short messaging service system, and transmits the received response information to the first short messaging service system.

When the second short messaging service system does not generate the second information identifier, the gateway generates the second information identifier. Therefore, the gateway establishes a correspondence relationship between the first information identifier and the second information identifier according to the first information identifier and the second information identifier. The method for establishing the correspondence relationship is the same as that described when the second short messaging service system generates the second information identifier.

The gateway receives the response information transmitted by the second short messaging service system. The response information may carry the second information identifier or may not carry the second information identifier, and transmits the received response information to the first short messaging service system.

In some embodiments, as the gateway generates the second information identifier, the step of the gateway establishing a correspondence relationship between the first information identifier and the second information identifier according to the first information identifier and the second information identifier may be before the step of receiving the response information transmitted by the second short messaging service system, or may also be after the step of receiving the response information transmitted by the second short messaging service system.

In an alternative embodiment of the present invention, after the step of transmitting the received response information to the first short messaging service system, the method further includes:
the gateway receiving first receipt information carrying the second information identifier transmitted by the second short messaging service system; and
the gateway performing protocol conversion on the received first receipt information to generate second receipt information, acquiring the first information identifier according to the second information identifier, and transmitting the second receipt information and the first information identifier to the first short messaging service system.

The second short messaging service system transmits the first receipt information carrying the second information identifier to the gateway, which receives the first receipt information carrying the second information identifier. The gateway performs protocol conversion on the first receipt information to generate second receipt information. The first information identifier is acquired according to the second information identifier using the correspondence relationship between the first information identifier and the second information identifier, and the second receipt information and the first information identifier are transmitted to the first short messaging service system. The first short messaging service system acquires the second receipt information and the first information identifier, and can know a transmission condition of the short messaging service of the first type corresponding to the first information identifier. It should be noted that if a system for the short messaging service of the second type is an RCS system, as the system can feed back transmission and reading conditions of the short messaging service of the first type, multiple second receipt information may be generated.

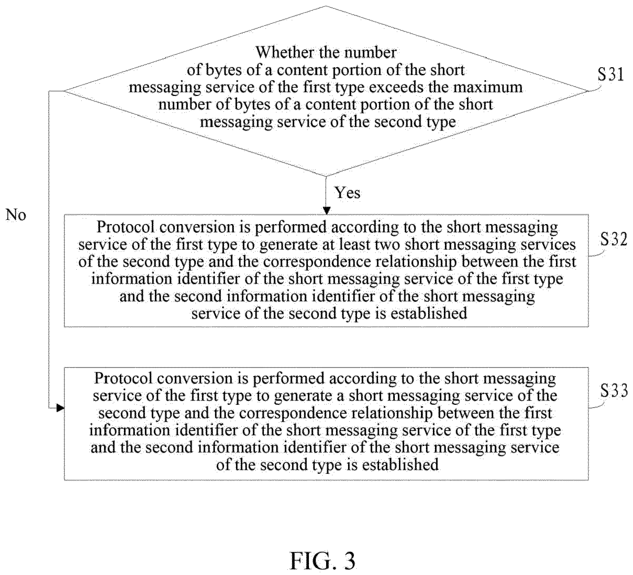

With reference to Fig. 3, illustrated is a flowchart of the third embodiment of a method for short messaging service intercommunication according to the present invention.

In the third embodiment of the method for short messaging service intercommunication according to the present invention, the present embodiment differs from the first embodiment and the second embodiment in that, on the basis of the first embodiment and/or the second embodiment, in the present embodiment, when the first short messaging service system is a rich communication suite system, the short messaging service of the first type is a rich communication suite short messaging service, the second short messaging service system is a traditional short messaging service system and the short messaging service of the second type is a traditional short messaging service, the step of the gateway performing protocol conversion on the received short messaging service of the first type to generate the short messaging service of the second type includes:
In step S31, it is judged whether the number of bytes of a content portion of the short messaging service of the first type exceeds the maximum number of bytes of a content portion of the short messaging service of the second type.

There is a limitation of the number of bytes of a content portion of the SMS short messaging service, i.e., the maximum number of bytes. For example, under some protocols of the SMS system, the content portion of the SMS short messaging service cannot exceed 254 bytes. The maximum numbers of bytes of the content portion of the SMS short messaging service may also differ under different protocols. If the content portion of the SMS short messaging service exceeds its maximum number of bytes, it needs to divide the content portion of the SMS short messaging service into a plurality of segments for transmission.

The gateway judges whether the number of bytes of the content portion of the short messaging service of the first type exceeds the maximum number of bytes of the content portion of the short messaging service of the second type.

In step S32, if the number of bytes of the content portion of the short messaging service of the first type exceeds the maximum number of bytes of the content portion of the short messaging service of the second type, protocol conversion is performed according to the short messaging service of the first type to generate at least two short messaging services of the second type and the correspondence relationship between the first information identifier of the short messaging service of the first type and the second information identifier of the short messaging service of the second type is established.

If it is judged that the number of bytes of the content portion of the short messaging service of the first type exceeds the maximum number of bytes of the content portion of the short messaging service of the second type, protocol conversion is performed according to the short messaging service of the first type, and two or more short messaging services of the second type are generated. For example, the content portion of the short messaging service of the first type on which the protocol conversion has been performed completely are divided into two or more segments, i.e., divided into two or more short messaging services of the second type. The generated two or more short messaging services of the second type also correspondingly have two or more second information identifiers, i.e., one first information identifier corresponds to two or more second information identifiers, and the gateway establishes a correspondence relationship between the first information identifier of the short messaging service of the first type and the second information identifier of the short messaging service of the second type.

In step S33, if the number of bytes of the content portion of the short messaging service of the first type does not exceed the maximum number of bytes of the content portion of the short messaging service of the second type, protocol conversion is performed according to the short messaging service of the first type to generate a short messaging service of the second type and the correspondence relationship between the first information identifier of the short messaging service of the first type and the second information identifier of the short messaging service of the second type is established.

If it is judged that the number of bytes of the content portion of the short messaging service of the first type does not exceed the maximum number of bytes of the content portion of the short messaging service of the second type, after protocol conversion is performed on a short messaging service of the first type, it only needs to generate a short messaging service of the second type, and similarly, a correspondence relationship between the first information identifier of the short messaging service of the first type and the second information identifier of the short messaging service of the second type is established.

The present invention further provides an apparatus for short messaging service intercommunication.

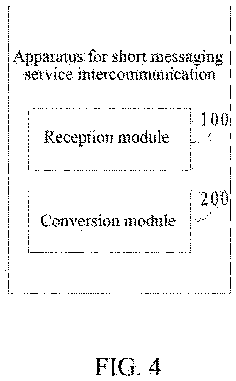

With reference to Fig. 4, illustrated is a functional module diagram of the first embodiment of an apparatus for short messaging service intercommunication according to the present invention.

In the first embodiment of the apparatus for short messaging service intercommunication according to the present invention, the apparatus includes:
a reception module 100, which can be implemented by a reception interface of a gateway, and is arranged to receive a short messaging service of a first type transmitted by a first short messaging service system.

The first short messaging service system is an SMS system, the short messaging service of the first type is an SMS short messaging service, the second short messaging service system is an RCS system, and the short messaging service of the second type is an RCS short messaging service; alternatively, the first short messaging service system is an RCS system, the short messaging service of the first type is an RCS short messaging service, the second short messaging service system is an SMS system, and the short messaging service of the second type is an SMS short messaging service. Herein, both the SMS short messaging service and the RCS short messaging service are short messaging services which can be stored and forwarded. The SMS system includes an SMS short messaging service center, an SMS short messaging service business gateway, an SMS short messaging service industry gateway, an SMS intercommunication gateway etc.

The present embodiment uses the RCS system as the first short messaging service system, the RCS short messaging service as the short messaging service of the first type, the SMS system as the second short messaging service system, and the SMS short messaging service as the short messaging service of the second type. It should be noted that the present embodiment is not limited to the case where the RCS system is used as the first short messaging service system, the RCS short messaging service is used as the short messaging service of the first type, the SMS system is used as the second short messaging service system, and the SMS short messaging service is used as the short messaging service of the second type. If the RCS system is the second short messaging service system, the RCS short messaging service is the short messaging service of the second type, the SMS system is the first short messaging service system, and the SMS short messaging service is the short messaging service of the first type, those skilled in the art can also achieve intercommunication of the RCS short messaging service and the traditional short messaging service according to the method provided in the present invention.

Before performing the step of receiving the short messaging service of the first type transmitted by the first short messaging service system, the apparatus interfaces with the SMS system and the RCS system. For example, it is connected to the SMS system through an SMPPBIND instruction.

In the present embodiment, before performing step S10, the apparatus may also access the RCS system as an identity of User Equipment (UE). For example, the apparatus transmits a registration instruction (for example, SIPREGISTER) to the RCS system for registration. After the registration is completed, the apparatus establishes a connection with the RCS system as a user equipment. Thus, there is no need to transform the traditional communication network and the RCS network.

If a user needs to transmit a short messaging service to the SMS system through the RCS system, the user transmits an RCS short messaging service in the RCS system. The RCS system transmits the RCS short messaging service to the reception module 100, which receives the RCS short messaging service transmitted by the RCS system.

A conversion module 200, which can be implemented by a processor of the gateway, and is arranged to perform protocol conversion on the received short messaging service of the first type to generate a short messaging service of the second type and transmit the generated short messaging service of the second type to a second short messaging service system.

As protocols of the SMS system and the RCS system are different, the conversion module 200 is required to perform protocol conversion on the received RCS short messaging service according to the received RCS short messaging service to adapt to the protocol of the SMS system. After the conversion module 200 performs protocol conversion on the RCS short messaging service, an SMS short messaging service is generated and the generated SMS short messaging service is transmitted to the SMS system. After receiving the SMS short messaging service, the SMS system transmits the SMS short messaging service to a corresponding user, which achieves intercommunication of the RCS system and the SMS system.

In the present embodiment, the apparatus may further select a destination network element according to a preset rule. The destination network element may be an SMS short messaging service center, an SMS short messaging service business gateway, an SMS short messaging service industry gateway, an SMS intercommunication gateway etc.

In the present embodiment, the reception module 100 receives a short messaging service of a first type transmitted by a first short messaging service system; and the conversion module 200 performs protocol conversion on the received short messaging service of the first type to generate short messaging service of a second type and transmits the generated short messaging service of the second type to a second short messaging service system. The present embodiment converts the short messaging service of the first type received from the first short messaging service system into a short messaging service of the second type and transmits the short messaging service of the second type to the second short messaging service system, which achieves intercommunication of RCS short messaging services and traditional short messaging services, so that a user can receive and transmit the traditional short messaging services through an RCS system and can also transmit and receive the RCS short messaging services through a traditional short messaging service system, thereby facilitating the use by the user. On the other hand, this is also beneficial for promotion and application as well as development of the RCS system.

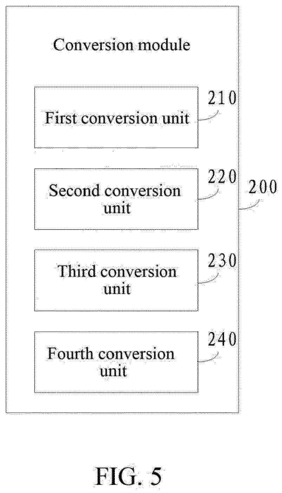

With reference to Fig. 5, illustrated is a refined functional module diagram of the conversion module 200 in the apparatus for short messaging service intercommunication in Fig. 4.

In an alternative embodiment of the present invention, the conversion module 200 includes:
a first conversion unit 210, arranged to, when the first short messaging service system does not generate a first information identifier and the second short messaging service system does not generate a second information identifier, generate the second information identifier according to the first information identifier, return the generated first information identifier to the first short messaging service system, perform protocol conversion on the received short messaging service of the first type to generate the short messaging service of the second type, and generate the second information identifier according to the first information identifier; and transmit the generated second information identifier and the generated short messaging service of the second type to the second short messaging service system, or store the second information identifier in the short messaging service of the second type, and transmit the short messaging service of the second type carrying the second information identifier to the second short messaging service system.

As both the RCS system and the SMS system have a plurality of protocols, when the protocols are different, the systems for generating the first information identifier and the second information identifier may also be different. Therefore, the first information identifier may be generated by the first short messaging service system or the apparatus, and the second information identifier may be generated by the second short messaging service system or the apparatus. Therefore, there are four cases described in the present embodiment respectively.

When the first short messaging service system does not generate the first information identifier and the second short messaging service system does not generate the second information identifier, the first conversion unit 210 generates the first information identifier and the second information identifier. The first conversion unit 210 generates the first information identifier according to the received short messaging service of the first type and generates the second information identifier according to the first information identifier and the requirements of the protocol of the second short messaging service system. As both of the first information identifier and the second information identifier are generated by the gateway, the first information identifier and the second information identifier may be the same, that is, the generated first information identifier is a general information identifier; and, of course, the first information identifier and the second information identifier may also be different. It should be noted that the present embodiment does not limit an order of the generation of the second information identifier and the generation of the short messaging service of the second type. Protocol conversion may be firstly performed on the received short messaging service of the first type to generate a short messaging service of the second type and then the second information identifier may be generated according to the first information identifier. Alternatively, the second information identifier may be firstly generated according to the first information identifier, and then protocol conversion is performed on the received short messaging service of the first type to generate the short messaging service of the second type.

The first conversion unit 210 returns the generated first information identifier to the first short messaging service system. For example, if the first short messaging service system is an SMS system and the SMS system uses an SMPP protocol, the first conversion unit 210 returns the first information identifier to the SMS system using the SMPP DELIVER RESP message. Methods for transmitting an information identifier are different for different protocols. Therefore, the first conversion unit 210 transmits the generated second information identifier and the generated short messaging service of the second type to the second short messaging service system, or stores the second information identifier in the short messaging service of the second type, and transmits the short messaging service of the second type carrying the second information identifier to the second short messaging service system. For example, in an SIP protocol, the second information identifier is stored in a header field imdn.Message-ID of SIPMESSAGE.

A second conversion unit 220, arranged to, when the first short messaging service system does not generate the first information identifier and the second short messaging service system generates the second information identifier, generate the first information identifier according to the received short messaging service of the first type, return the generated first information identifier to the first short messaging service system, perform protocol conversion on the received short messaging service of the first type to generate the short messaging service of the second type, and transmit the generated short messaging service of the second type to the second short messaging service system.

When the first short messaging service system does not generate the first information identifier and the second short messaging service system generates the second information identifier, the second conversion unit 220 only needs to generate the first information identifier without generating the second information identifier.

The second conversion unit 220 generates the first information identifier according to the received short messaging service of the first type and the protocol of the first short messaging service system.

The second conversion unit 220 returns the generated first information identifier to the first short messaging service system, and as the gateway does not generate the second information identifier, only the generated short messaging service of the second type is transmitted to the second short messaging service system.

A third conversion unit 230, arranged to, when the first short messaging service system generates the first information identifier and the second short messaging service system does not generate the second information identifier, acquire the first information identifier of the received short messaging service of the first type, perform protocol conversion on the received short messaging service of the first type to generate the short messaging service of the second type, and generate the second information identifier according to the acquired first information identifier; and transmit the generated second information identifier and the generated short messaging service of the second type to the second short messaging service system, or store the second information identifier in the short messaging service of the second type, and transmit the short messaging service of the second type carrying the second information identifier to the second short messaging service system.

When the first short messaging service system generates the first information identifier and the second short messaging service system does not generate the second information identifier, the third conversion unit 230 only needs to generate the second information identifier without generating the first message identifier. The third conversion unit 230 acquires the first information identifier of the received short messaging service of the first type, for example, the third conversion unit 230 transmits an instruction to the first short messaging service system, which transmits the first information identifier to the gateway; or when the first short messaging service system transmits the short messaging service of the first type to the gateway, the short messaging service of the first type carries the first information identifier, and the third conversion unit 230 acquires the first information identifier from the received short messaging service of the first type.

The third conversion unit 230 generates the second information identifier according to the first information identifier. For example, content of the first information identifier is read, and the second information identifier is generated in accordance with the read content according to the protocol of the second short messaging service system. The third conversion unit 230 returns the generated first information identifier to the first short messaging service system, and transmits the generated short messaging service of the second type to the second short messaging service system. It should be noted that the present embodiment does not limit an order of the generation of the second information identifier and the generation of the short messaging service of the second type. Protocol conversion may be firstly performed on the received short messaging service of the first type to generate the short messaging service of the second type, and the second information identifier may be generated according to the first information identifier. Alternatively, the second information identifier may be firstly generated according to the first information identifier, and then protocol conversion may be performed on the received short messaging service of the first type to generate short messaging service of the second type.

The third conversion unit 230 transmits the generated second information identifier and the generated short messaging service of the second type to the second short messaging service system, or stores the second information identifier in the short messaging service of the second type and transmits the short messaging service of the second type carrying the second information identifier to the second short messaging service system.

A fourth conversion unit 240, arranged to, when the first short messaging service system generates the first information identifier and the second short messaging service system generates the second information identifier, acquire the first information identifier of the received short messaging service of the first type, and transmit the generated short messaging service of the second type to the second short messaging service system.

When the first short messaging service system generates the first information identifier and the second short messaging service system generates the second information identifier, the fourth conversion unit 240 does not need not to generate the first information identifier or the second information identifier. The fourth conversion unit 240 acquires the first information identifier of the received short messaging service of the first type, which may be known with reference to the above described method of the third conversion unit 230 acquiring the first information identifier of the received short messaging service of the first type when the first short messaging service system generates the first information identifier and the second short messaging service system does not generate the second information identifier. As the gateway does not generate the second information identifier, only the generated short messaging service of the second type is transmitted to the second short messaging service system.

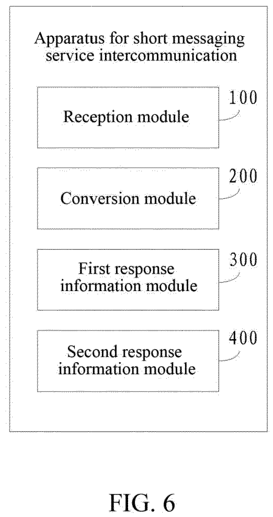

With reference to Fig. 6, illustrated is a functional module diagram of the second embodiment of an apparatus for short messaging service intercommunication according to the present invention.

In the second embodiment of the apparatus for short messaging service intercommunication according to the present invention, the present embodiment differs from the first embodiment in that, on the basis of the first embodiment, the apparatus further includes:
a first response information module 300, arranged to, when the second short messaging service system generates the second information identifier, receive response information carrying the second information identifier transmitted by the second short messaging service system, acquire the second information identifier carried in the response information, establish a correspondence relationship between the first information identifier and the second information identifier, and transmit the received response information to the first short messaging service system; and
when the second short messaging service system generates the second information identifier, the apparatus does not generate the second information identifier. Therefore, the second short messaging service system transmits response information carrying the second information identifier to the first response information module 300, which acquires the second information identifier from the response information, and establishes a correspondence relationship between the first information identifier and the second information identifier, which may be a correspondence relationship between a first information identifier and a plurality of second information identifiers, or may also be a correspondence relationship between a plurality of first information identifiers and a second information identifier. This correspondence relationship may be a mapping table of the first information identifier and the second information identifier, or may also be an algorithm for unique conversion between the first information identifier and the second information identifier, or any other suitable form.

The first response information module 300 transmits the received response information to the first short messaging service system.

A second response information module 400, arranged to, when the second short messaging service system does not generate the second information identifier, establish, by the gateway, the correspondence relationship between the first information identifier and the second information identifier according to the first information identifier and the second information identifier, receive the response information transmitted by the second short messaging service system, and transmit the received response information to the first short messaging service system.

When the second short messaging service system does not generate the second information identifier, the apparatus generates the second information identifier. Therefore, the second response information module 400 establishes a correspondence relationship between the first information identifier and the second information identifier according to the first information identifier and the second information identifier. The method for establishing the correspondence relationship is the same as that described when the second short messaging service system generates the second information identifier.

The second response information module 400 receives the response information transmitted by the second short messaging service system. The response information may carry the second information identifier or may not carry the second information identifier, and transmits the received response information to the first short messaging service system.

In some embodiments, as the gateway generates the second information identifier, the step of the gateway establishing a correspondence relationship between the first information identifier and the second information identifier according to the first information identifier and the second information identifier may be before the step of receiving the response information transmitted by the second short messaging service system, or may also be after the step of receiving the response information transmitted by the second short messaging service system.

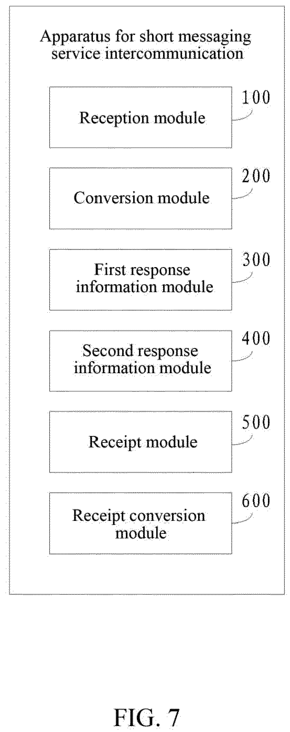

With reference to Fig. 7, illustrated is a functional module diagram of an alternative embodiment of an apparatus for short messaging service intercommunication according to the present invention.

In an alternative embodiment of the present invention, the apparatus further includes:
a receipt module 500, arranged to receive first receipt information carrying the second information identifier transmitted by the second short messaging service system; and
a receipt conversion module 600, arranged to perform protocol conversion on the received first receipt information to generate second receipt information, acquire the first information identifier according to the second information identifier, and transmit the second receipt information and the first information identifier to the first short messaging service system.

The second short messaging service system transmits the first receipt information carrying the second information identifier to the receipt module 500, which receives the first receipt information carrying the second information identifier. The receipt conversion module 600 performs protocol conversion on the first receipt information to generate second receipt information. The first information identifier is acquired according to the second information identifier using the correspondence relationship between the first information identifier and the second information identifier, and the second receipt information and the first information identifier are transmitted to the first short messaging service system. The first short messaging service system acquires the second receipt information and the first information identifier, and can know a transmission condition of the short messaging service of the first type corresponding to the first information identifier. It should be noted that if a system for the short messaging service of the second type is an RCS system, as the system can feed back transmission and reading conditions of the short messaging service of the first type, multiple second receipt information may be generated.

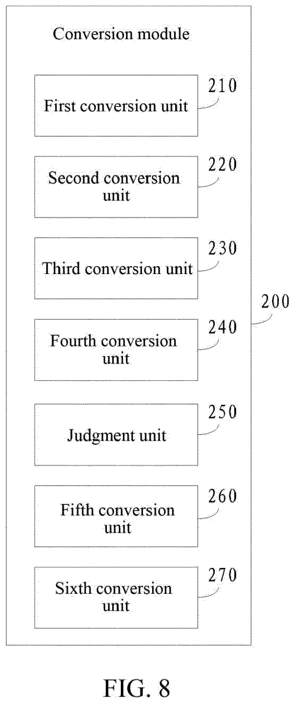

With reference to Fig. 8, illustrated is a functional module diagram of the third embodiment of an apparatus for short messaging service intercommunication according to the present invention.

In the third embodiment of the apparatus for short messaging service intercommunication according to the present invention, the present embodiment differs from the first embodiment and the second embodiment in that, on the basis of the first embodiment and/or the second embodiment, in the present embodiment, when the first short messaging service system is a rich communication suite system, the short messaging service of the first type is a rich communication suite short messaging service, the second short messaging service system is a traditional short messaging service system and the short messaging service of the second type is a traditional short messaging service, the conversion module 200 further includes:
a judgment unit 250, arranged to judge whether the number of bytes of a content portion of the short messaging service of the first type exceeds the maximum number of bytes of a content portion of the short messaging service of the second type, if the number of bytes of a content portion of the short messaging service of the first type exceeds the maximum number of bytes of a content portion of the short messaging service of the second type, notify a fifth conversion unit 260, and if the number of bytes of a content portion of the short messaging service of the first type does not exceeds the maximum number of bytes of a content portion of the short messaging service of the second type, notify a sixth conversion unit 270.

There is a limitation of the number of bytes of a content portion of the SMS short messaging service, i.e., the maximum number of bytes. For example, under some protocols of the SMS system, the content portion of the SMS short messaging service cannot exceed 254 bytes. The maximum numbers of bytes of the content portion of the SMS short messaging service may also differ under different protocols. If the content portion of the SMS short messaging service exceeds its maximum number of bytes, it needs to divide the content portion of the SMS short messaging service into a plurality of segments for transmission.

The judgment unit 250 judges whether the number of bytes of the content portion of the short messaging service of the first type exceeds the maximum number of bytes of the content portion of the short messaging service of the second type.

The fifth conversion unit 260, arranged to perform protocol conversion according to the short messaging service of the first type to generate at least two short messaging services of the second type and establish the correspondence relationship between the first information identifier of the short messaging service of the first type and the second information identifier of the short messaging service of the second type.

If the judgment unit 250 judges that the number of bytes of the content portion of the short messaging service of the first type exceeds the maximum number of bytes of the content portion of the short messaging service of the second type, the fifth conversion unit 260 performs protocol conversion according to the short messaging service of the first type, and two or more short messaging services of the second type are generated. For example, the content portion of the short messaging service of the first type on which the protocol conversion has been performed completely are divided into two or more segments, i.e., divided into two or more short messaging services of the second type. The generated two or more short messaging services of the second type also correspondingly have two or more second information identifiers, i.e., a first information identifier corresponds to two or more second information identifiers, and the gateway establishes a correspondence relationship between the first information identifier of the short messaging service of the first type and the second information identifier of the short messaging service of the second type.

The sixth conversion unit 270, arranged to perform protocol conversion according to the short messaging service of the first type to generate a short messaging service of the second type and establish the correspondence relationship between the first information identifier of the short messaging service of the first type and the second information identifier of the short messaging service of the second type.

If the judgment unit 250 judges that the number of bytes of the content portion of the short messaging service of the first type does not exceed the maximum number of bytes of the content portion of the short messaging service of the second type, after the sixth conversion unit 270 performs protocol conversion on the short messaging service of the first type, it only needs to generate a short messaging service of the second type, and similarly, a correspondence relationship between the first information identifier of the short messaging service of the first type and the second information identifier of the short messaging service of the second type is established.

The foregoing is merely alternative embodiments of the present invention and is not intended to limit the patent scope of the present invention. Any equivalent construction or equivalent flow transformation made using the content of the specification and the accompanying drawings of the present invention, which is directly or indirectly applied in other related art fields, is included within the patent protection scope of the present invention.

### Industrial applicability

The embodiments of the present invention achieve intercommunication of the RCS short messaging services and the traditional short messaging services, so that the user can receive and transmit the traditional short messaging services through an RCS system. Similarly, the user can also transmit and receive the RCS short messaging services through a traditional short messaging system, thereby facilitating the use by the user and being beneficial for promotion and application as well as development of the RCS system.

## Claims

1. A method for short messaging service intercommunication, comprising the following steps:
a gateway receiving a short messaging service of a first type transmitted by a first short messaging service system; and
the gateway performing protocol conversion on the received short messaging service of the first type to generate a short messaging service of a second type and transmitting the generated short messaging service of the second type to a second short messaging service system, wherein
the first short messaging service system is a traditional short messaging service system, the short messaging service of the first type is a traditional short messaging service, the second short messaging service system is a rich communication suite system, and the short messaging service of the second type is a rich communication suite short messaging service; or, the first short messaging service system is a rich communication suite system, the short messaging service of the first type is a rich communication suite short messaging service, the second short messaging service system is a traditional short messaging service system, and the short messaging service of the second type is a traditional short messaging service.

2. The method for short messaging service intercommunication according to claim 1, wherein the step of the gateway performing protocol conversion on the received short messaging service of the first type to generate a short messaging service of a second type and transmitting the generated short messaging service of the second type to a second short messaging service system comprises:
when the first short messaging service system does not generate a first information identifier and the second short messaging service system does not generate a second information identifier, generating the first information identifier according to the received short messaging service of the first type, returning the generated first information identifier to the first short messaging service system, performing protocol conversion on the received short messaging service of the first type to generate the short messaging service of the second type, and generating the second information identifier according to the first information identifier; and transmitting the generated second information identifier and the generated short messaging service of the second type to the second short messaging service system, or, storing the second information identifier in the short messaging service of the second type, and transmitting the short messaging service of the second type carrying the second information identifier to the second short messaging service system;
when the first short messaging service system does not generate the first information identifier and the second short messaging service system generates the second information identifier, generating the first information identifier according to the received short messaging service of the first type, returning the generated first information identifier to the first short messaging service system, performing protocol conversion on the received short messaging service of the first type to generate the short messaging service of the second type, and transmitting the generated short messaging service of the second type to the second short messaging service system;
when the first short messaging service system generates the first information identifier and the second short messaging service system does not generate the second information identifier, acquiring the first information identifier of the received short messaging service of the first type, performing protocol conversion on the received short messaging service of the first type to generate the short messaging service of the second type, and generating the second information identifier according to the acquired first information identifier; and transmitting the generated second information identifier and the generated short messaging service of the second type to the second short messaging service system, or storing the second information identifier in the short messaging service of the second type, and transmitting the short messaging service of the second type carrying the second information identifier to the second short messaging service system; and
when the first short messaging service system generates the first information identifier and the second short messaging service system generates the second information identifier, acquiring the first information identifier of the received short messaging service of the first type, performing protocol conversion on the received short messaging service of the first type to generate the short messaging service of the second type, and transmitting the generated short messaging service of the second type to the second short messaging service system.

3. The method for short messaging service intercommunication according to claim 2, wherein after the step of the gateway performing protocol conversion on the received short messaging service of the first type to generate a short messaging service of a second type and transmitting the generated short messaging service of the second type to a second short messaging service system, the method further comprises:
when the second short messaging service system generates the second information identifier, the gateway receiving response information carrying the second information identifier transmitted by the second short messaging service system, acquiring the second information identifier carried in the response information, establishing a correspondence relationship between the first information identifier and the second information identifier, and transmitting the received response information to the first short messaging service system; and
when the second short messaging service system does not generate the second information identifier, the gateway establishing a correspondence relationship between the first information identifier and the second information identifier according to the first information identifier and the second information identifier, receiving the response information transmitted by the second short messaging service system, and transmitting the received response information to the first short messaging service system.

4. The method for short messaging service intercommunication according to claim 3, wherein after the step of transmitting the received response information to the first short messaging service system, the method further comprises:
the gateway receiving first receipt information carrying the second information identifier transmitted by the second short messaging service system; and
the gateway performing protocol conversion on the received first receipt information to generate second receipt information, acquiring the first information identifier according to the second information identifier, and transmitting the second receipt information and the first information identifier to the first short messaging service system.

5. The method for short messaging service intercommunication according to any one of claims 2-4, wherein when the first short messaging service system is a rich communication suite system, the short messaging service of the first type is a rich communication suite short messaging service, the second short messaging service system is a traditional short messaging service system and the short messaging service of the second type is a traditional short messaging service, the step of the gateway performing protocol conversion on the received short messaging service of the first type to generate the short messaging service of the second type comprises:
judging whether a number of bytes of a content portion of the short messaging service of the first type exceeds a maximum number of bytes of a content portion of the short messaging service of the second type;
if the number of bytes of a content portion of the short messaging service of the first type exceeds the maximum number of bytes of a content portion of the short messaging service of the second type, performing protocol conversion according to the short messaging service of the first type to generate at least two short messaging services of the second type and establishing the correspondence relationship between the first information identifier of the short messaging service of the first type and the second information identifier of the short messaging service of the second type; and
if the number of bytes of a content portion of the short messaging service of the first type does not exceed the maximum number of bytes of a content portion of the short messaging service of the second type, performing protocol conversion according to the short messaging service of the first type to generate a short messaging service of the second type and establishing the correspondence relationship between the first information identifier of the short messaging service of the first type and the second information identifier of the short messaging service of the second type.

6. An apparatus for short messaging service intercommunication, comprising:
a reception module arranged to receive a short messaging service of a first type transmitted by a first short messaging service system; and
a conversion module arranged to perform protocol conversion on the received short messaging service of the first type to generate a short messaging service of a second type and transmit the generated short messaging service of the second type to a second short messaging service system, wherein
the first short messaging service system is a traditional short messaging service system, the short messaging service of the first type is a traditional short messaging service, the second short messaging service system is a rich communication suite system, and the short messaging service of the second type is a rich communication suite short messaging service; or, the first short messaging service system is a rich communication suite system, the short messaging service of the first type is a rich communication suite short messaging service, the second short messaging service system is a traditional short messaging service system, and the short messaging service of the second type is a traditional short messaging service.

7. The apparatus for short messaging service intercommunication according to claim 6, wherein the conversion module comprises:
a first conversion unit arranged to, when the first short messaging service system does not generate a first information identifier and the second short messaging service system does not generate a second information identifier, generate the first information identifier according to the received short messaging service of the first type, return the generated first information identifier to the first short messaging service system, perform protocol conversion on the received short messaging service of the first type to generate the short messaging service of the second type, and generate the second information identifier according to the first information identifier; and transmit the generated second information identifier and the generated short messaging service of the second type to the second short messaging service system, or store the second information identifier in the short messaging service of the second type, and transmit the short messaging service of the second type carrying the second information identifier to the second short messaging service system;
a second conversion unit arranged to, when the first short messaging service system does not generate the first information identifier and the second short messaging service system generates the second information identifier, generate the first information identifier according to the received short messaging service of the first type, return the generated first information identifier to the first short messaging service system, perform protocol conversion on the received short messaging service of the first type to generate the short messaging service of the second type, and transmit the generated short messaging service of the second type to the second short messaging service system;
a third conversion unit arranged to, when the first short messaging service system generates the first information identifier and the second short messaging service system does not generate the second information identifier, acquire the first information identifier of the received short messaging service of the first type, perform protocol conversion on the received short messaging service of the first type to generate the short messaging service of the second type, and generate the second information identifier according to the acquired first information identifier; and transmit the generated second information identifier and the generated short messaging service of the second type to the second short messaging service system, or store the second information identifier in the short messaging service of the second type, and transmit the short messaging service of the second type carrying the second information identifier to the second short messaging service system; and
a fourth conversion unit arranged to, when the first short messaging service system generates the first information identifier and the second short messaging service system generates the second information identifier, acquire the first information identifier of the received short messaging service of the first type, perform protocol conversion on the received short messaging service of the first type to generate the short messaging service of the second type, and transmit the generated short messaging service of the second type to the second short messaging service system.

8. The apparatus for short messaging service intercommunication according to claim 7, further comprising:
a first response information module arranged to, when the second short messaging service system generates the second information identifier, receive response information carrying the second information identifier transmitted by the second short messaging service system, acquire the second information identifier carried in the response information, establish a correspondence relationship between the first information identifier and the second information identifier, and transmit the received response information to the first short messaging service system; and
a second response information module arranged to, when the second short messaging service system does not generate the second information identifier, establish a correspondence relationship between the first information identifier and the second information identifier according to the first information identifier and the second information identifier, receive the response information transmitted by the second short messaging service system, and transmit the received response information to the first short messaging service system.

9. The apparatus for short messaging service intercommunication according to claim 8, further comprising:
a receipt module arranged to receive first receipt information carrying the second information identifier transmitted by the second short messaging service system; and
a receipt conversion module arranged to perform protocol conversion on the received first receipt information to generate second receipt information, acquire the first information identifier according to the second information identifier, and transmit the second receipt information and the first information identifier to the first short messaging service system.

10. The apparatus for short messaging service intercommunication according to any one of claims 7-9, wherein when the first short messaging service system is a rich communication suite system, the short messaging service of the first type is a rich communication suite short messaging service, the second short messaging service system is a traditional short messaging service system and the short messaging service of the second type is a traditional short messaging service, the conversion module further comprises:
a judgment unit arranged to judge whether a number of bytes of a content portion of the short messaging service of the first type exceeds a maximum number of bytes of a content portion of the short messaging service of the second type, if the number of bytes of a content portion of the short messaging service of the first type exceeds the maximum number of bytes of a content portion of the short messaging service of the second type, notify a fifth conversion unit, and if the number of bytes of a content portion of the short messaging service of the first type does not exceed the maximum number of bytes of a content portion of the short messaging service of the second type, notify a sixth conversion unit;
the fifth conversion unit arranged to perform protocol conversion according to the short messaging service of the first type to generate at least two short messaging services of the second type and establish the correspondence relationship between the first information identifier of the short messaging service of the first type and the second information identifier of the short messaging service of the second type; and
the sixth conversion unit arranged to perform protocol conversion according to the short messaging service of the first type to generate a short messaging service of the second type and establish the correspondence relationship between the first information identifier of the short messaging service of the first type and the second information identifier of the short messaging service of the second type.
